# NEUE EUROPÄISCHE PATENTSCHRIFT

(11) **EP 3 681 308 B2**
(45) Veröffentlichungstag und Bekanntmachung des Hinweises auf die Entscheidung über den Einspruch: **04.12.2024**
(45) Hinweis auf die Patenterteilung: 01.09.2021
(21) Anmeldenummer: 18781967.7
(22) Anmeldetag: 11.09.2018
(51) Int. Cl.: A23K 10/30, A23K 20/147, A23J 1/14, A23L 3/18, C11B 1/10, C11B 1/08, A23L 33/185

(54) **VERFAHREN ZUR GEWINNUNG VON PROTEINPRÄPARATEN AUS ÖLSAMEN VON SONNENBLUMEN UND/ODER RAPS SOWIE PROTEINPRÄPARAT**
METHOD FOR OBTAINING PROTEIN PREPARATIONS FROM SUNFLOWER AND/OR CANOLA OILSEEDS, AND PROTEIN PREPARATION
PROCÉDÉ D'OBTENTION DE PRÉPARATIONS DE PROTÉINE ISSUES DES GRAINES OLÉAGINEUSES DE TOURNESOLS ET/OU DE COLZA AINSI QUE LA PRÉPARATION DE PROTÉINE

(30) Priorität: 11.09.2017 DE 102017120905
(43) Veröffentlichungstag der Anmeldung: 22.07.2020
(73) Patentinhaber: Fraunhofer-Gesellschaft zur Förderung der angewandten Forschung e.V., 80686 München (DE)
(72) Erfinder: EISNER, Peter, 85354 Freising (DE); MITTERMAIER, Stephanie, 85368 Moosburg a. d. Isar (DE); FRANKL, Michael, 81241 München (DE)
(74) Vertreter: Gagel, Roland
(86) Internationale Anmeldenummer: PCT/EP2018/074407
(87) Internationale Veröffentlichungsnummer: WO 2019/048695

(56) Entgegenhaltungen:
- EP-A1- 2 885 980
- US-A- 3 734 901
- US-A- 4 219 469
- US-A- 4 219 470
- US-A1- 2011 301 074
- US-A1- 2012 009 287
- LIN M J Y ET AL: "CERTAIN FUNCTIONAL PROPERTIES OF SUNFLOWER MEAL PRODUCTS", vol. 39, no. 2, 1 January 1974 (1974-01-01), pages 1 - 3, XP002590913, ISSN: 0022-1147, Retrieved from the Internet <URL:http://www3.interscience.wiley.com/cgi-bin/fulltext/119662970/PDFSTART?CRETRY=1&SRETRY=0> [retrieved on 20100807]

## Beschreibung

### Stand der Technik

Die Erfindung betrifft ein Verfahren zur Gewinnung von Proteinpräparaten aus den Samen von Sonnenblumen und/oder Raps zum Einsatz als Lebensmittelzutat, als Futtermittel oder als technischer Hilfsstoff.

Vor dem Hintergrund knapper werdender Agrarflächen und Ressourcen gewinnen pflanzliche Proteinpräparate für die Ernährung des Menschen, für technische Applikationen und für den Einsatz in Tierfutter immer mehr an Bedeutung. Die zunehmende Nachfrage nach hochwertigen Lebensmitteln führt zu einem steigenden Bedarf an ernährungsphysiologisch optimierten Proteinpräparaten, die sowohl von Menschen als auch von Tieren weitgehend vollständig metabolisiert und die einfach und kostengünstig bereitgestellt werden können.

Eine kostengünstige Quelle für Lebens- und Futtermittelproteine sind Press- und Extraktionsrückstände aus der Gewinnung von Speiseöl aus den Samen von Sonnenblumen und Raps. Diese Samen sind gekennzeichnet durch eine feste Schale mit überwiegend dunkler Pigmentierung und durch ein ölhaltiges Fruchtfleisch. Ein Abtrennen der Schalen ist bei diesen Rohstoffen möglich, jedoch besonders bei Rapssamen verfahrenstechnisch sehr aufwändig.

Die bei der Ölgewinnung anfallenden Press- und Extraktionsrückstände werden heute vorwiegend als Futtermittel genutzt. Jedoch ist ihr Einsatz trotz des hohen Proteingehalts limitiert. Dies liegt zu einen an einem sehr hohen Schalenanteil im Rückstand, der über 25 Mass.-% liegt, in Einzelfällen aber auch über 50 Mass.-% liegen kann. Weiterhin ist der Anteil störender Begleitstoffe sehr hoch, vor allem der Gehalt sekundärer Pflanzenstoffe wie z.B. Polyphenole, Tannine, Glucosinolate oder Phytinsäure. Diese Komponenten können in Summe in den Rückständen über 10 Mass.-% betragen und beeinträchtigen Farbe, Geschmack und die Verdaubarkeit der Proteine ganz erheblich. Presskuchen und Extraktionsrückstände aus der Gewinnung von Sonnenblumen- und Rapsöl eignen sich daher nicht zur Herstellung von hochwertigen Proteinmehlen für Lebens- und Futtermittel und sind aufgrund der enthaltenen sekundären Pflanzenstoffe nur in kleinen Anteilen für die Fütterung einiger Tierarten geeignet.

Sonnenblumen- und Rapssamen werden nach Stand der Technik mit dem Fokus auf eine hohe Ölausbeute verarbeitet. Dabei werden sie zunächst von Besatz befreit, teilweise konditioniert (Einstellung einer definierten Temperatur und Feuchte), dann durch Pressen mechanisch vorentölt (Restölgehalte maximal 10 Mass.-%) und anschließend der Restölgehalt mit Hexan aus den Presskuchen extrahiert. Auch eine sog. Fertigpressung bis auf Restölgehalte von ca. 5 Mass.-% ohne nachfolgende Extraktion wird durchgeführt, wobei der Restölgehalt in den Presskuchen die Lagerstabilität der Rückstände reduziert.

Nach Stand der Technik werden Sonnenblumen- und Rapssamen überwiegend ungeschält oder teilgeschält gepresst. Bei der Teilschälung verbleiben über 50 Mass.-% der in den Samen enthaltenen Schalen vor der Entölung im Rohstoff, was im Mittel einem Restschalengehalt vor der Pressung von >10 Mass.-% bei Sonnenblumensamen und >8 Mass.-% bei Rapssamen entspricht. Insbesondere zur Pressung, d.h. Fertigpressung oder Vorpressung als Teilentölung, wird nach Stand der Technik ein Schalenanteil von mindestens 10 Mass.-% als notwendig erachtet, um die Drainage des Öls aus der Presse zu erleichtern und damit die Pressgeschwindigkeit zu erhöhen.

Seit einigen Jahren gibt es auch Ansätze, um Proteine aus den Rückständen der Sonnenblumen- oder Rapsölgewinnung zu Proteinmehlen oder -kontentraten aufzubereiten und sie somit für Lebensmittel- und hochwertige Futtermittelapplikationen nutzbar zu machen. Einige Schriften beschreiben die Herstellung von Proteinkonzentraten aus Raps- und Sonnenblumensamen. Diese Proteinkonzentrate werden durch trocken- oder nasstechnische Aufbereitung (z.B. unter Einsatz von Lösemitteln) gewonnen, wobei das Protein im Rückstand verbleibt. Der hohe Anteil an unerwünschten Begleitstoffen und der hohe Rohfasergehalt schränken die Verwendung der Rückstände als Futtermittel jedoch ein, so dass ein besonderer Vorteil im Vergleich zu den Sonnenblumen- und Rapsextraktionsschroten vielfach nicht erkennbar wird. Die meisten Proteinkonzentrate haben daher eine beschränkte Applikationsbreite und sind nur in geringen Konzentrationen in Futtermitteln einsetzbar.

In der EP 2 885 980 B1 wird unter anderem ein Verfahren zur Gewinnung von Sonnenblumenprotein als proteinreiches Nahrungs- oder Futtermittel beschrieben. Zur Herstellung des Futtermittels werden geschälte Sonnenblumenkerne mit einem Restschalengehalt von >5 Mass.-% eingesetzt. Es erfolgt eine Pressung der Saat auf einen Ölgehalt ≥8 Mass.-% bis ≤18 Mass.-% und einen Proteingehalt von ≥30% bis ≤45%, bezogen auf Trockenmasse. Auf den Einfluss des Restschalengehalts auf die Verdaubarkeit der Proteine wird nicht eingegangen. Zudem ist auch hier davon auszugehen, dass der hohe Rohfasergehalt und der hohe Chlorogensäuregehalt des Produkts dessen Akzeptanz und damit dessen Verwertbarkeit als Futtermittel stark einschränken können.

Die WO 2010097238 A2 beschreibt ebenso ein Verfahren zur Herstellung von Proteinpräparaten aus geschälten Sonnenblumenkernen. Bei dem Verfahren werden die Sonnenblumensamen bis auf einen Restschalengehalt von ≤ 5 Mass.-% geschält oder geschälte Sonnenblumensamen mit einem Restschalengehalt von ≤ 5 Mass.-% bereitgestellt. Es erfolgt eine mechanische Teilentölung der geschälten Sonnenblumensamen durch Pressen, die bis auf einen Fett- oder Ölgehalt der geschälten Sonnenblumensamen im Bereich zwischen 10 und 35 Mass.-% durchgeführt wird. Nach Durchführung eines oder mehrerer Extraktionsschritte mit mindestens einem Lösungsmittel wird ein entfettetes proteinhaltiges Mehl als Proteinpräparat erhalten. Das Proteinpräparat weist sowohl optisch als auch funktionell sehr vorteilhafte Eigenschaften auf, die einen direkten Einsatz im Lebens- oder Futtermittelbereich ermöglichen. Durch die niedrigen Temperaturen durch Pressung bei unter 80°C und Desolventierung bei unter 90 °C wird mit diesem Verfahren erreicht, dass gute technofunktionelle Eigenschaften erhalten bleiben, ein geringer Denaturierungsgrad vorliegt und damit eine sehr gute Verdaubarkeit und Bioverfügbarkeit gegeben sein sollten. Aufgrund der niedrigen Temperaturen im Verlauf der Verarbeitung der Sonnenblumensamen von unter 90 °C ergeben sich aber bei der industriellen Nutzung des Verfahrens sehr lange Verweilzeiten in den lösemittelbasierten Prozessstufen und daraus resultierend eine thermische Schädigung und hohe Kosten für den Prozess. Dies schränkt die Anwendbarkeit der Präparate deutlich ein und führt zu erheblichen wirtschaftlichen Nachteilen.

Die Aufgabe der vorliegenden Erfindung besteht darin, ein wirtschaftliches Verfahren für die Herstellung von qualitativ hochwertigen Proteinpräparaten aus Sonnenblumen- und Rapssamen bereitzustellen. Die Präparate sollen aufgrund von geringen Gehalten an sekundären Pflanzenstoffen und Fasern eine gute Verdaubarkeit der Proteine aufweisen, farblich, geschmacklich und technofunktionell ansprechend sein und zudem durch ihren hohen Proteingehalt und den weitgehenden Erhalt der Proteineigenschaften vielseitig in Lebensmitteln und Futtermitteln einsetzbar sein und dennoch kostengünstig hergestellt werden können.

### Beschreibung der Erfindung

Diese Aufgabe wird mit dem Verfahren nach Anspruch 1 gelöst. Die weiteren Ansprüche geben bevorzugte Ausführungsformen des Verfahrens an.

Für die vorliegende Erfindung zur Gewinnung hochwertiger Proteinzutaten aus Sonnenblumen- und/oder Rapssamen werden die Samen zunächst auf einen Schalengehalt <5 Mass.-%, vorteilhaft kleiner 2 Mass.-%, vorteilhaft kleiner 1 Mass.-%, und besonders vorteilhaft <0,1 Mass.-% geschält und die Schalen vom Kernfleisch durch Sieben, Sichten und Sortieren separiert. Damit ist sichergestellt, dass geringe Faseranteile, ein ansprechender Geschmack, eine helle Farbe und eine gute Funktionalität erreicht werden können. Alternativ können auch bereits entsprechend geschälte Sonnenblumen- und/oder Rapssamen bereitgestellt und für das Verfahren verwendet werden.

Bei dem erfindungsgemäßen Verfahren zur Gewinnung von Proteinpräparaten aus Sonnenblumenoder Rapssamen werden im Anschluss an das Schälen oder an die Bereitstellung der geschälten Samen wenigstens folgende Schritte durchgeführt:
- mechanische Teilentölung der geschälten Sonnenblumenoder Rapssamen durch Pressen bis auf einen Fett- oder Ölgehalt des Presskuchens im Bereich zwischen >7 und <35 Mass.-%, bevorzugt zwischen >8 und <35 Mass.-%, besonders bevorzugt zwischen >10 und <35 Mass.-%,
- Abtrennen von im Presskuchen gebundenem Wasser aus dem Presskuchen auf einen Restwassergehalt kleiner 5 Mass.-%, besonders vorteilhaft kleiner 2 Mass.-%, und
- Durchführung eines oder mehrerer Extraktionsschritte mit mindestens einem organischen Lösungsmittel, nach vorheriger oder während einer gleichzeitigen Zerkleinerung des Presskuchens auf eine Partikelgröße oder Flockendicke <2 mm, durch die ein entfettetes proteinhaltiges Mehl oder Granulat als Proteinpräparat erhalten wird, das einen Restölanteil unter 4 Mass.-%, vorteilhaft <2 Mass.-% aufweist (Bestimmung mit Soxhlet-Methode).

Mindestens einer der Extraktionsschritte wird bei dem Verfahren so ausgeführt, dass eine weitere Entölung der teilentölten geschälten Sonnenblumen- oder Rapssamen bewirkt wird. Im Verlauf der genannten Schritte wird dabei eine Temperatur von 100 °C nicht überschritten, vorteilhaft wird sowohl die Pressung, als auch die Extraktion (Entölung) und die nach der Extraktion durchgeführte Desolventierung bei einer Temperatur im Produkt (Presskuchen oder Proteinmehl/- granulat) unter 90 °C, besonders vorteilhaft unter 80 °C erfolgen, um eine Proteinschädigung weitgehend auszuschließen. Da die Extraktion der am längsten andauernde Prozessschritt ist, ist besonders bei der Extraktion darauf zu achten, dass eine Temperatur von 90 °C nicht überschritten wird, vorteilhaft wird sie unter 80 °C liegen, besonders vorteilhaft kleiner sein als 70°C.

Es ergeben sich besondere Vorteile für die Funktionalität der mit dem Verfahren gewonnenen Proteinpräparate, wenn vor dem einen oder den mehreren Schritten der Lösemittel-Extraktion der Presskuchen weitgehend von Wasser befreit wird. Typischerweise enthalten Presskuchen nach dem Pressen einen Anteil von 5 bis 12 Mass-% an in der Matrix gebundenem Wasser. Wenn nun der Presskuchen derart behandelt wird, dass der Wassergehalt auf unter 5 Mass-%, vorteilhaft unter 3 Mass%, besonders vorteilhaft unter 2 Mass-% reduziert wird, ist die Proteinlöslichkeit nach der Extraktion erhöht. Dabei kann die Abtrennung des Wassers durch Erwärmen des Presskuchens auf Temperaturen zwischen 60 und 100°C erfolgen, vorteilhaft zwischen 70 und 90°C, durch Überströmen mit einem weitgehend trocknen und/oder warmen Gasstrom mit einer Temperatur zwischen 60 und 100°C, vorteilhaft zwischen 70 und 90°C, oder durch Reduktion des Druckes in einem Behältnis, in dem sich ein Presskuchen mit einer Temperatur >60°C befindet, so dass das im Presskuchen enthaltene Wasser durch Verdampfen bzw. Verdunsten zu einem Anteil abgetrennt wird.

Erfindungsgemäß erfolgt die Lösemittel-Extraktion sowohl im Falle von Raps- als auch mit Sonnenblumenpresskuchen in einer Immersionsextraktionsapparatur, wobei vor oder vorteilhaft während der Lösemittelbehandlung eine weitgehende Zerkleinerung der nach der Pressung erhaltenen Presskuchen auf die oben angegebenen Partikelgrößen oder Flockendicken erfolgt. Der überwiegende Anteil des Presskuchens aus einer mechanischen Presse in Form von Scheibchen oder Strängen weist nach der Pressung nach Stand der Technik und auch beim vorliegenden Verfahren eine Dicke, bzw. eine Partikelgröße im Bereich zwischen 0,4 und 4 cm, vorzugsweise im Bereich zwischen 0,5 und 2 cm auf.

Es zeigt sich, dass die Immersionsextraktion mit einem Lösemittel wie Ethanol und auch die Desolventierung des Lösemittels trotz der niedrigen Extraktionstemperaturen von z.T. unter 70 °C sehr viel schneller und auch störungsfrei verläuft, wenn die Partikelgröße auf unter 2 mm, vorteilhaft unter 1 mm, besonders vorteilhaft unter 0,5 mm, noch besser unter 0,2 mm reduziert wird oder der Presskuchen zu Flocken mit einer Dicke von kleiner 2 mm, vorteilhaft kleiner 1 mm, besonders vorteilhaft kleiner 0,5 mm, noch besser kleiner 0,2 mm verarbeitet wird.

Unter einer Partikelgröße von <2 mm wird in der vorliegenden Patentanmeldung verstanden, dass bei Siebung einer repräsentativen Stichprobe der nach Zerkleinerung des Presskuchens vorhandenen Presskuchenpartikel mit einem Sieb einer Maschenweite von 2 mm 10% oder weniger der Masse aller Partikel der Stichprobe auf dem Sieb zurück gehalten werden und 90% oder mehr der Masse der Partikel im Siebdurchgang zu finden sind. Für eine Partikelgröße von <1 mm und <0,5 mm gilt das dann entsprechend für ein Sieb mit einer Maschenweite von 1 mm bzw. 0,5 mm oder 0,2 mm. Sollte die Zerkleinerung erst bei Vorliegen einer Suspension mit einem organischen Lösemittel erfolgen (z.B. durch einen Rührer), so ist die Siebgrößenanalyse mit der Suspension gegebenenfalls unter Zuhilfenahme weiteren Lösemittels durchzuführen.

Unter Flockendicke wird die mittlere Dicke der entstandenen Flocken verstanden, die nach Flockierung in einem Walzenstuhl oder in einem anderen Aggregat, das zum Zerdrücken oder Quetschen des Presskuchens eingesetzt wird, erhalten werden. Die Dicke der Flocken kann z.B. über Messung mit einem Messschieber oder einer Mikrometerschraube ermittelt werden, die mittlere Dicke entspricht dann dem arithmetischen Mittelwert aus mindestens 50 Messungen in einer repräsentativen Stichprobe.

Die Partikelgröße des zerkleinerten Presskuchens kann dabei für die erfindungsgemäße Ausgestaltung der Extraktion auf unterschiedliche Arten eingestellt werden. So können Brecher oder Mühlen wie Schlag-, Prall- oder Schneidmühlen mit entsprechenden Siebeinsätzen oder auch Walzenstühle mit entsprechenden Walzenabständen vor der Extraktion zum Einsatz kommen. Dabei werden Partikelschüttungen mit einem gewissen Größenspektrum erhalten. Diese können im Anschluss oder während der Zerkleinerung durch Fraktionierung nach Größe z.B. mittels Siebung oder Sichtung zur Vergleichmäßigung der Partikelgrößenverteilung weiter behandelt werden.

Auch strömende Flüssigkeiten als Strahl oder, besonders vorteilhaft, feststoffhaltige Dispersionen können für die Zerkleinerung genutzt werden. Auch können für die Zerkleinerung einfache Rühr-, Misch- oder Förderaggregate genutzt werden, die z.B. zum Rühren oder Pumpen des Lösemittels vorgesehen sind. So ist es möglich, Vorrichtungen für ein Zerkleinern zu nutzen, die für das Fördern von Medien vorgesehen sind, wie zum Beispiel Schneckenförderer, pneumatische Förderer oder Kreiselpumpen. Der Fachmann wird in der Lage sein, ggf. durch Vorversuche, die mechanische Belastung und die Dauer der Behandlung in derartigen mechanischen Aggregaten so zu wählen, dass die erfindungsgemäße Zerkleinerung der Partikel erreicht wird.

Eine weitere Möglichkeit der Zerkleinerung ist die Flockierung des Presskuchens, die in einer Pressvorrichtung oder mittels eines Walzenstuhls erfolgen kann. Hierbei werden unterschiedlich große Partikel und unterschiedliche Formen der Presskuchen dadurch vereinheitlicht, dass sie durch einen Spalt mit definierter Dicke gefördert oder zwischen zwei Platten gepresst werden. Im Falle eines Walzenstuhls werden die Partikel in den Spalt eingezogen, der sich zwischen zwei rotierenden Walzen befindet. In Folge dieser Behandlung liegt der Presskuchen in Form von Plättchen bzw. Flocken (Flakes) mit weitgehend definierter Dicke vor.

Es zeigt sich überraschenderweise, dass nach einer trocknen Vermahlung oder Flockierung der Presskuchen auf die genannten Partikelgrößen bzw. Flockendicken oder bei einer simultanen Zerkleinerung der Partikel während der Extraktion (z.B. durch Rührer oder durch anderen mechanischen Energieeitrag) auf diese Partikelgrößen trotz des mechanischen Energieeintrags eine besonders schonende Entölung erreicht wird. Durch den Zerkleinerungsvorgang sinkt die erforderliche Verweilzeit des Presskuchens in der Extraktion mit zunehmender Zerkleinerung, so dass die Presskuchen kürzer im Extrakteur verbleiben können und die lösemittelbasierte Schädigung des im Presskuchen enthaltenen Proteins reduziert wird. Dabei ist es besonders von Vorteil, wenn die Zerkleinerung der Partikel mit einer weitgehend gleichmäßigen Scherung im gesamten Lösemittel-Presskuchen-Gemisch einhergeht, was dazu führt, dass die Extraktionsgeschwindigkeit steigt und die lösemittelbasierte Schädigung weiter reduziert werden kann.

Wie bereits weiter oben angeführt, wird der Presskuchen bzw. der Extraktionsrückstand während der Verarbeitung auf eine Partikelgröße oder Flockendicke kleiner 2 mm zerkleinert, vorteilhaft auf kleiner 1 mm, besonders vorteilhaft kleiner 0,5 mm, noch besser kleiner 0,2 mm. Dabei zeigt sich, dass die Extraktionsdauer von mehreren Stunden auf wenige Minuten verkürzt werden kann, wenn die Partikelgröße derart zerkleinert vorliegt. In Folge der verkürzten Extraktionsdauer werden die Proteine deutlich weniger belastet, da die Temperatur- und Lösemitteleinwirkung von mehreren Stunden auf wenige Minuten reduziert werden kann. Dadurch weisen die mit dem erfindungsgemäßen Verfahren gewonnenen Präparate in der späteren Anwendung eine bessere Löslichkeit und auch meist bessere Eigenschaften für Wasserbindung, Ölbindung und Schaum- und Emulgierkapazität auf, als die Präparate, die aus den nicht zerkleinerten ganzen Presskuchen-Stücken mit z.T. über 1 cm Kantenlänge bis zu einem Ölgehalt unter 3 Mass.-% über mehrere Stunden extrahiert und anschließend desolventiert, also von Lösemittel befreit wurden.

Nach Stand der Technik ist es unerwünscht, feinere Partikel mit einer Größe unter 1 mm in den Prozess einzutragen, da feine Partikel zu Produktverlusten durch Entwicklung von Staub oder suspendiertem Abrieb führen können. Daher weisen in bestehenden Anlagen nach Stand der Technik die eingesetzten Partikel meist einen Durchmesser oder eine Kantenlänge über 1 cm auf.

Im erfindungsgemäßen Verfahren wird diese bislang unerwünschte Zerkleinerung bewusst gewählt, um die Temperatur- und Lösemittelbelastung für die Proteine zu minimieren. Trotz der feineren Partikelgröße gelingt es dabei mit geeigneten Maßnahmen, die Verluste, die durch Feinabrieb über die Mischung aus Lösemittel und Öl (Miscella) in die Ölphase gelangen können, gering zu halten. Diese Maßnahmen sollen im Folgenden beschrieben werden.

Besondere Vorteile bietet hier eine mehrstufige Immersionsextraktion. Bei diesem Verfahren tauchen die Presskuchen ganz in das Lösemittel ein, so dass während der Extraktion kein Staub gebildet werden kann. In einem Immersionsextrakteur ist es zudem möglich, die Zerkleinerung der Partikel durch ein Rührwerk gezielt durchzuführen. Dies eröffnet die Möglichkeit einer schrittweisen Zerkleinerung über mehrere Extraktionsstufen. Nach der ersten Immersionsextraktion des Presskuchens können Lösemittel und Feststoff mechanisch voneinander getrennt werden. Das ölhaltige Lösemittel kann desolventiert und erneut für die Entölung eines weiteren zerkleinerten Presskuchens genutzt werden, der vom Lösemittel getrennte Presskuchen kann mit frischem Lösemittel erneut behandelt und damit noch weiter von Öl befreit werden. Die Lösemittelfraktionen aus der Behandlung eines bereits weniger Öl enthaltenden Feststoffs kann zur Reduktion der gesamten Lösemittelmenge erneut für die Extraktion eines mehr Öl enthaltenden Feststoffs mehrfach genutzt werden. Dies wird als Gegenstromextraktion bezeichnet.

Vorzugsweise wird die erste Extraktionsstufe bei der mehrstufigen Immersionsextraktion des vorgeschlagenen Verfahrens ohne Rühren durchgeführt.

Ein weiterer Vorteil der Immersionsextraktion ergibt sich aus der Möglichkeit, die Sedimentation gezielt für die Trennschäfte bzw. für den Trenngrad der Fest-Flüssig-Trennung zu nutzen. Hierbei erfolgt im Anschluss an die Extraktion, die in einer Lösemittel-Presskuchen-Suspension mit definierten Partikelgrößen durchgeführt wird, nach Ausschalten der Dispergiervorrichtung (z.B. Rührer) im Erdschwerefeld eine Sedimentation bis zu einem definierten Volumenverhältnis aus fester Phase und Überstand. Bei einem Volumenanteil des Überstands von mindestens 50%, vorteilhaft >60%, besonders vorteilhaft >70% wird der Überstand abgetrennt. Das Sediment wird erneut mit Lösemittel beaufschlagt, die Mischung gerührt, bis sich aufgrund der Scherung während des Dispergierens, z.B. mittels Rührwerk, eine neue Partikelgrößenverteilung einstellt. Im Anschluss beginnt der Sedimentationsvorgang erneut. Überraschenderweise verläuft der zweite Sedimentationsvorgang trotz kleinerer Partikel genauso schnell wie der erste, unter anderem dadurch begünstigt, dass der Ölgehalt im Überstand geringer ist als in der ersten Sedimentation. Der Ablauf der Suspendierung-Extraktion-Sedimentation wird mehrfach wiederholt, vorteilhaft mehr als 2-mal, bevorzugt mehr als 3-mal, besonders vorteilhaft mehr als 4-mal.

Somit ist es im Gegenstrombetrieb möglich, in einer ersten Extraktionsstufe die vollfetten Presskuchen in groben Stücken zu belassen und nicht oder nur geringfügig zu zerkleinern, um Produktverluste über die Miscella zu vermeiden. Die einmal vorextrahierten Presskuchen werden dann in den folgenden Stufen mit Hilfe eines Rührwerks bis zur erfindungsgemäßen Partikelgröße weiter zerkleinert. Im Gegenstrombetrieb von Presskuchen und Lösemittel können dann die feineren Partikel in den einzelnen Raffinaten zurück gehalten werden und gelangen nicht in die Miscella, die in der ersten Stufe von nicht zerkleinerten Partikeln abgetrennt wird.

Auch die Desolventierung, also die destillative Abtrennung des Lösemittels aus dem entölten Presskuchen, kann mit dem erfindungsgemäßen Verfahren deutlich verkürzt werden. Bei erfindungsgemäßer Zerkleinerung der Presskuchen gelingt es, den Lösemittelgehalt im Proteinpräparat, also im entfetteten proteinhaltigen Mehl oder Granulat, ohne deutliche Proteinschädigung innerhalb weniger Minuten von über 10 Mass.-% auf weniger als 1 Mass.-% zu reduzieren, auch wenn die Temperatur des Presskuchens bzw. Proteinpräparates während der Desolventierung unter 100 °C eingestellt wird.

In jedem Fall zeigt sich bei Einsatz des erfindungsgemäßen Verfahrens aufgrund der deutlichen Zerkleinerung der Partikel eine beschleunigte Extraktion und Lösemittelentfernung, so dass die Temperatur-Zeit-Belastung bei gleicher Temperatur um mindestens 30%, in vielen Fällen um mehr als 90% reduziert werden kann.

In einer vorteilhaften Ausgestaltung des Verfahrens wird eine Immersionsextraktion in einem Rührbehälter durchgeführt, wobei die Umfangsgeschwindigkeit des Rührwerks eine Geschwindigkeit von größer 10 cm/s übersteigt, vorteilhaft über 50 cm/s liegt, besonders vorteilhaft über 1 m/s. Mit derart hohen Scherbeanspruchungen im Rührbehälter gelingt es, auch Presskuchen mit einer hohen Festigkeit einfach und schnell zu zerkleinern.

Es ist auch möglich, die Mischung aus Lösemittel und Presskuchen mit Hilfe einer Pumpe zu zerkleinern, z.B. indem ein Teil der Suspension oder die gesamte Suspension über eine Kreiselpumpe gefördert wird.

### Ausführungsbeispiel 1:

Bei der Immersionsextraktion ist der Massenanteil von Feststoff zu Flüssigkeit im Bereich von 50:50 bis 10:90 zu variieren. Besonders bei höheren Anteilen von Feststoff in der Suspension gelingt eine schnelle Zerkleinerung durch Eintrag von mechanischer Energie z.B. durch Rühren.

Als Lösemittel für hochwertige Proteinzutaten kommt Ethanol zum Einsatz, da eine Ethanolextraktion zu einer geschmacklichen Verbesserung der Zutaten führt. Da reiner Ethanol sehr teuer ist, wird vorteilhaft Ethanol mit einem Anteil an Wasser kleiner 10 Mass-%, besonders vorteilhaft kleiner 5 Mass-% an Wasser, zum Einsatz kommen. Ethanol mit geringen Wasseranteilen hat den Vorteil, dass neben Öl auch Anteile von polaren Stoffen wie Oligosacchariden oder sekundären Pflanzenstoffen aus dem Presskuchen heraus gelöst werden können. Dies bewirkt eine geschmackliche und farbliche Verbesserung der Zutaten, ohne dass die Proteine zu einem größeren Anteil denaturiert werden. Eine weitgehende Denaturierung der Proteine zeigt sich hingegen bei hohen Wassergehalten von z.B. 30 Mass-% oder mehr.

Bei der Extraktion mit Ethanol wird man versuchen, die Trockungszeit bei der Desolventierung zur Vermeidung einer Proteinschädigung zu minimieren. Dies kann dazu führen, dass Reste an Ethanol im Proteinpräparat enthalten bleiben. Obwohl dies eigentlich unerwünscht ist, zeigen sich bei Proben mit höheren Ethanolgehalten Vorteile in den funktionellen Eigenschaften. Daher sollten die erfindungsgemäßen Proteine noch Reste an Ethanol enthalten. So sollte der Ethanolgehalt im Proteinpräparat größer als 50 mg/kg sein, vorteilhaft größer 500 mg/kg, besonders vorteilhaft größer 5.000 mg/kg. Trotz des enthaltenen Ethanols sind die sensorischen und funktionellen Eigenschaften der Proteinpräparate überraschend gut.

Es zeigt sich, dass die so mit Ethanol behandelten Proteinpräparate besondere Vorteile in der Farbe und auch bei einigen funktionellen Eigenschaften aufweisen. So zeigen Präparate, die einen Restethanolgehalt über 50 mg/kg aufweisen, eine besondere Helligkeit (L-Wert bei der L*a*b-Bestimmung). Ein Proteinpräparat weist im vermahlenen, pulverförmigen Zustand eine Helligkeit L* von mindestens 80 auf, vorzugsweise mindestens 85 und besonders bevorzugt mindestens 90. Darüber hinaus weist das Präparat einen Proteingehalt von größer 45 und kleiner 80 Mass.-% auf, einen Ölgehalt kleiner 4 Mass-% (Bestimmung mit Soxhlet-Methode) und zeigt trotz des enthaltenen Ethanols eine Proteinlöslichkeit von größer 25% und eine Emulgierkapazität größer 400 ml Öl/Gramm Protein. Die genutzten Analysemethoden entsprechen den Methoden, die in der Schrift EP2400859 beschrieben sind.

Im Folgenden wird beispielhaft ein Ausführungsbeispiele angeführt, in dem ein Proteinpräparate gemäß dem vorgeschlagenen Verfahren aus Sonnenblumensamen gewonnen wurden.

50 kg eines Sonnenblumen-Presskuchens mit einem Schalenanteil <0,1 Mass.-% und einem Ölgehalt von 20 Mass-%, der mit Hilfe einer Presse bei einer Kerntemperatur des Presskuchens von 70 °C gewonnen wurde und der aus zylindrischen Stückchen mit einem Durchmesser von 5 mm und einer mittleren Länge von 3 cm besteht, wurde 20 Minuten bei einer Temperatur von 80°C im Vakuum (100 mbar) auf einen Wassergehalt von 3 Mass-% getrocknet. Im folgenden Schritt wurde zu dem Presskuchen 100 kg Ethanol mit einer Temperatur von 60 °C gegeben. In der ersten Stufe erfolgte kein Rühren der Suspension, um das Entstehen von Feinstpartikeln durch Zerkleinerung zu vermeiden. Die Suspension wurde 90 Minuten stehen gelassen, danach wurde der ölhaltige Überstand (Miscella) abgetrennt und zur Lösemittelrückgewinnung nachfolgend eingedampft. Das von der Miscella befreite Sediment wurde erneut mit Ethanol versetzt und die Suspension mit einem Balkenrührer bei einer Umfangsgeschwindigkeit von 40 cm/s für 30 Minuten suspendiert. Dabei konnten die Partikel auf kleiner 2 mm Partikelgröße zerkleinert werden. Im Anschluss wurde die Suspension 30 Minuten stehen gelassen, so dass die Partikel zu einem weitgehend festen Sediment sedimentierten. Der Überstand über dem Sediment wurde abgetrennt und durch neues Lösemittel ersetzt. Dieser Vorgang wurde 4mal wiederholt, so dass der Ölgehalt des Presskuchens am Ende der 5. Extraktion unter 2 Mass.-% betrug. Die Partikelgröße lag nach der 5. Extraktion bei <1 mm.

## Patentansprüche

1. Verfahren zur Gewinnung von Proteinpräparaten aus Samen von Sonnenblumen und/oder Raps, mit folgenden Schritten
- Schälen der Sonnenblumen- oder Rapssamen bis auf einen Schalengehalt <5 Mass.-%, um geschälte Sonnenblumenoder Rapssamen zu erhalten, oder Bereitstellen von geschälten Sonnenblumen- oder Rapssamen mit einem Schalengehalt von <5 Mass.-%;
- mechanische Teilentölung der geschälten Sonnenblumenoder Rapssamen durch Pressen bis auf einen Fett- oder Ölgehalt der geschälten Sonnenblumen- oder Rapssamen im Bereich zwischen >7 und <35 Mass.-%; und
- Durchführung eines oder mehrerer Extraktionsschritte mit mindestens einem organischen Lösungsmittel, wobei
-- mindestens einer der Extraktionsschritte eine weitere Entölung der teilentölten geschälten Sonnenblumen- oder Rapssamen bewirkt und nach vorheriger oder während einer gleichzeitigen Zerkleinerung eines durch die mechanische Teilentölung erhaltenen Presskuchens auf eine Partikelgröße <2 mm oder eine Flockendicke <2 mm als Immersionsextraktion durchgeführt wird,
-- der mindestens eine Extraktionsschritt für die weitere Entölung der teilentölten geschälten Sonnenblumen- oder Rapssamen mit Ethanol oder einer wässrigen Ethanol-Lösung mit einem Wasseranteil von <10 Mass-% als Lösungsmittel durchgeführt wird, und
-- durch den einen oder die mehreren Extraktionsschritte nach einer Delsolventierung ein entfettetes proteinhaltiges Mehl oder Granulat als Proteinpräparat erhalten wird, das einen Restölanteil <4 Mass.-% aufweist, und wobei
-- nach der mechanischen Teilentölung und vor der Durchführung des einen oder der mehreren Extraktionsschritte im Presskuchen gebundenes Wasser auf einen Restwassergehalt kleiner 5 Mass.-% aus dem Presskuchen abgetrennt wird.

2. Verfahren nach Anspruch 1,
**dadurch gekennzeichnet,**
**dass** nach der mechanischen Teilentölung und vor der Durchführung des einen oder der mehreren Extraktionsschritte im Presskuchen gebundenes Wasser auf einen Restwassergehalt kleiner 2 Mass.-% aus dem Presskuchen abgetrennt wird.

3. Verfahren nach Anspruch 1 oder 2,
**dadurch gekennzeichnet,**
**dass** die Zerkleinerung des Presskuchens auf eine Partikelgröße <1 mm, vorzugsweise <500µm, erfolgt.

4. Verfahren nach einem der Ansprüche 1 bis 3,
**dadurch gekennzeichnet,**
**dass** eine Temperatur der geschälten Sonnenblumen- oder Rapssamen bei der mechanischen Teilentölung und dem einen oder den mehreren Extraktionsschritten bei <90°C gehalten wird.

5. Verfahren nach einem der Ansprüche 1 bis 4,
**dadurch gekennzeichnet,**
**dass** die Extraktionsschritte in Form einer mehrstufigen Immersionsextraktion durchgeführt werden.

6. Verfahren nach Anspruch 5,
**dadurch gekennzeichnet,**
**dass** über mehrere Extraktionsstufen der mehrstufigen Immersionsextraktion eine schrittweise Zerkleinerung des Presskuchens erfolgt.

7. Verfahren nach Anspruch 5 oder 6,
**dadurch gekennzeichnet,**
**dass** die erste Extraktionsstufe der mehrstufigen Immersionsextraktion ohne Rühren durchgeführt wird.

8. Verfahren nach einem der Ansprüche 5 bis 7,
**dadurch gekennzeichnet,**
**dass** die mehrstufige Immersionsextraktion im Gegenstrombetrieb von Presskuchen und Lösungsmittel erfolgt.

9. Verfahren nach einem der Ansprüche 5 bis 8,
**dadurch gekennzeichnet,**
**dass** bei der mehrstufigen Immersionsextraktion nach einer ersten Extraktionsstufe eine Sedimentation bis zu einem Volumenverhältnis aus Sediment und Überstand durchgeführt wird, bei dem ein Volumenanteil des Überstands > 50%, vorteilhaft >60%, besonders vorteilhaft >70% beträgt, und der Überstand bei Erreichen dieses Volumenverhältnisses abgetrennt wird, und in einer oder mehreren sich anschließenden weiteren Extraktionsstufen jeweils das aus der vorangehenden Extraktionsstufe erhaltene Sediment erneut in Lösemittel dispergiert wird, bis sich aufgrund einer Scherung während des Dispergierens eine neue Partikelgrößenverteilung einstellt, nach der jeweiligen weiteren Extraktionsstufe eine erneute Sedimentation bis zu einem Volumenverhältnis aus Sediment und Überstand durchgeführt wird, bei dem ein Volumenanteil des Überstands mindestens 50%, vorteilhaft >60%, besonders vorteilhaft >70% beträgt, und der Überstand bei Erreichen dieses Volumenverhältnisses abgetrennt wird.

10. Verfahren nach Anspruch 9,
**dadurch gekennzeichnet,**
**dass** mehr als zwei, bevorzugt mehr als drei der weiteren Extraktionsstufen mit den Schritten des Dispergierens des aus der vorangehenden Extraktionsstufe erhaltenen Sediments sowie der anschließenden Sedimentation und Abtrennung des Überstands durchgeführt werden.

11. Verfahren nach einem der Ansprüche 1 bis 10,
**dadurch gekennzeichnet,**
**dass** die Immersionsextraktion in einem Rührbehälter durchgeführt wird, der ein Rührwerk aufweist, wobei das Rührwerk während der Extraktion auf eine Umfangsgeschwindigkeit von >10 cm/s eingestellt wird.

12. Verfahren nach einem der Ansprüche 1 bis 11,
**dadurch gekennzeichnet,**
**dass** ein Verhältnis von Massenanteilen von Feststoff zu Flüssigkeit bei der Immersionsextraktion auf einen Bereich zwischen 50:50 und 10:90 eingestellt wird.

13. Verfahren nach einem der Ansprüche 1 bis 12,
**dadurch gekennzeichnet,**
**dass** der mindestens eine Extraktionsschritt für die weitere Entölung der teilentölten geschälten Sonnenblumen- oder Rapssamen mit einer wässrigen Ethanol-Lösung mit einem Wasseranteil von <5 Mass-% durchgeführt wird.

14. Verfahren nach einem der Ansprüche 1 bis 13,
**dadurch gekennzeichnet,**
**dass** die Delsolventierung bis auf einen Ethanolgehalt durchgeführt wird, der noch mehr als 50 mg/kg, vorteilhaft mehr als 500 mg/kg, besonders vorteilhaft mehr als 5.000 mg/kg beträgt.

## Claims

1. A method for obtaining protein preparations from sunflower and/or canola seeds with the following steps
- dehulling the sunflower or canola seeds up to a shell content of <5 wt% to obtain dehulled sunflower or canola seeds, or suppling dehulled sunflower or canola seeds with a shell content of <5 wt%;
- partially deoiling the dehulled sunflower or canola seeds mechanically by pressing up to a fat or oil content of the dehulled sunflower or canola seeds in the range from >7 to <35 wt%; and
- carrying out one or more extraction steps using at least one organic solvent, wherein
-- at least one of the extraction steps produces further deoiling of the partially deoiled, dehulled sunflower or canola seeds and is carried out as an immersion extraction process after a previous or during a simultaneous comminution of a press cake obtained by the mechanical partial deoiling to a particle size <2 mm or a flake thickness <2 mm,
-- the at least one extraction step for the further deoiling of the partially deoiled, dehulled sunflower or canola seeds is carried out with ethanol or an aqueous ethanol solution with a mass percentage by weight of <10 wt% water as solvent, and
-- a deoiled, protein-containing flour or granulate is obtained as protein preparation with a residual oil content <4 wt% by means of the one or more extraction steps after a desolventization process, and wherein
-- after the mechanical partial deoiling and before the performance of the one or more extraction steps, bound water in the press cake is separated from the press cake until the residual water content is less than 5 wt%.

2. The method according to Claim 1,
**characterized in that**
after the mechanical partial deoiling and before the performance of the one or more extraction steps, bound water in the press cake is separated from the press cake until the residual water content is less than 2 wt%.

3. The method according to Claim 1 or 2,
**characterized in that**
the comminution of the press cake is carried out up to a particle size <1 mm, preferably <500 µm.

4. The method according to any one of Claims 1 to 3,
**characterized in that**
a temperature of the dehulled sunflower or canola seeds is kept at <90°C during the mechanical partial deoiling and the one or more extraction steps.

5. The method according to any one of Claims 1 to 4,
**characterized in that**
the extraction steps are carried out in the form of a multistage immersion extraction.

6. The method according to Claim 5,
**characterized in that**
a stepwise comminution of the press cake is carried out over several extraction stages of the multistage immersion extraction.

7. The method according to Claim 5 or 6,
**characterized in that**
the first extraction stage of the multistage immersion extraction is carried out without stirring.

8. The method according to any one of Claims 5 to 7,
**characterized in that**
the multistage immersion extraction is performed in counterflow operation of press cake and solvent.

9. The method according to any one of Claims 5 to 8,
**characterized in that**
in the multistage immersion extraction, after a first extraction stage, a sedimentation is carried out up to a volume ratio between sediment and supernatant in which a volume proportion of the supernatant is equal to >50 %, advantageously >60 %, particularly advantageously >70 %, and when this volume ratio is reached the supernatant is separated, and in one or more further consecutive extraction stages the sediment obtained from each previous extraction stage is dispersed in solvent again, until due to shearing during the dispersion a new particle size distribution is established, a repeated sedimentation is carried out until a volume ratio between sediment and supernatant in which a volume proportion of the supernatant is equal to >50 %, advantageously >60 %, particularly advantageously >70 %, after each further extraction stage, and when this volume ratio is reached the supernatant is separated.

10. The method according to Claim 9,
**characterized in that**
more than two, preferably more than three of the further extraction stages with the steps of dispersing the sediment obtained in the previous extraction stage and subsequent sedimentation and separation of the supernatant are performed.

11. The method according to any one of Claims 1 to 10,
**characterized in that**
the immersion extraction is carried out in a stirring tank which includes an agitator, wherein the agitator is set to a peripheral speed of >10 cm/s during the extraction.

12. The method according to any one of Claims 1 to 11,
**characterized in that**
a ratio of proportions by weight of solid to liquid is set to a range between 50:50 and 10:90 during the immersion extraction.

13. The method according to any one of Claims 1 to 12,
**characterized in that**
the at least one extraction step for the further deoiling of the partially deoiled, dehulled sunflower or canola seeds is carried out with an aqueous ethanol solution with a mass percentage by weight of <5 wt% water.

14. The method according to any one of Claims 1 to 13,
**characterized in that**
the delsolventization is carried out up to an ethanol content which is still more than 50 mg/kg, advantageously more than 500 mg/kg, particularly advantageously more than 5,000 mg/kg.

## Revendications

1. Procédé d'extraction de préparations protéiques à partir de graines de tournesol et/ou de colza, comportant les étapes suivantes consistant à :
- peler les graines de tournesol ou de colza jusqu'à une teneur en épluchures <5 % en masse afin d'obtenir des graines de tournesol ou de colza décortiquées, ou de fournir des graines de tournesol ou de colza décortiquées dont la teneur en épluchures est inférieure <5 % en masse;
- effectuer un déshuilage partiel mécanique du tournesol ou du colza pelé par pressage jusqu'à une teneur en matière grasse ou en huile des graines de tournesol ou de colza épluchées dans la plage entre > 7 et <35 % en masse; et
- effectuer une ou plusieurs étapes d'extraction avec au moins un solvant organique, dans lequel
-- au moins une des étapes d'extraction provoque un déshuilage supplémentaire des graines de tournesol ou de colza épluchées partiellement déshuilées et après ou pendant un broyage préalable ou simultané d'un tourteau obtenu par déshuilage partiel mécanique à une granulométrie <2 mm ou une épaisseur de flocons <2 mm est réalisée comme une extraction par immersion,
-- au moins une étape d'extraction pour déshuiler davantage les graines de tournesol ou de colza pelées partiellement déshuilées est effectuée avec de l'éthanol ou une solution aqueuse d'éthanol avec une teneur en eau de <10 % en masse comme solvant, et
-- à travers une ou plusieurs étapes d'extraction après une extraction de solvant, une farine ou des granulés contenant des protéines dégraissées sont obtenus sous forme de préparation protéique, qui présente une teneur en huile résiduelle <4 % en masse, et dans lequel
-- après le déshuilage partiel mécanique et avant d'effectuer la ou les étapes d'extraction, l'eau liée dans le tourteau à une teneur en eau résiduelle inférieure à 5 % en masse est séparée du tourteau.

2. Procédé selon la revendication 1,
**caractérisé en ce qu'**
après le déshuilage partiel mécanique et avant d'effectuer la ou les étapes d'extraction, l'eau liée dans le tourteau à une teneur en eau résiduelle inférieure à 2 % en masse est séparée du tourteau.

3. Procédé selon la revendication 1 ou 2,
**caractérisé en ce que**
le concassage du tourteau a lieu à une taille des particules < 1mm, de préférence < 500µm.

4. Procédé selon une des revendications 1 à 3,
**caractérisé en ce qu'**
une température du tournesol ou du colza épluché est maintenue à <90°C pendant le déshuilage partiel mécanique et la ou les étapes d'extraction.

5. Procédé selon une des revendications 1 à 4,
**caractérisé en ce que**
les étapes d'extraction sont réalisées sous la forme d'une extraction par immersion en plusieurs étapes.

6. Procédé selon la revendication 5,
**caractérisé en ce que**
via plusieurs étapes d'extraction de l'extraction par immersion en plusieurs étapes est une fragmentation progressive du tourteau a lieu.

7. Procédé selon la revendication 5 ou 6,
**caractérisé en ce que**
la première étape d'extraction de l'extraction par immersion en plusieurs étapes est réalisée sans agitation.

8. Procédé selon une quelconque des revendications 5 à 7,
**caractérisé en ce que**
l'extraction par immersion en plusieurs étages a lieu pendant le fonctionnement à contre-courant du tourteau et du solvant.

9. Procédé selon une quelconque des revendications 5 à 8,
**caractérisé en ce que**
dans le cadre de l'extraction par immersion en plusieurs étapes après une première étape d'extraction, on réalise une sédimentation allant jusqu'à un rapport volumique de sédiment et de surnageant, dans lequel une fraction volumique du surnageant est > 50 %, avantageusement >60 %, particulièrement avantageusement > 70 %, et le surnageant est séparé lorsque ce rapport de volume est atteint, et dans un ou plusieurs autres étapes d'extraction suivantes le sédiment obtenu à partir de l'étape d'extraction précédente est redispersé dans le solvant jusqu'à ce qu'une nouvelle distribution granulométrique apparaisse en raison du cisaillement pendant la dispersion, après l'étape d'extraction suivante respective une nouvelle sédimentation jusqu'à un rapport volumique du sédiment et du surnageant est effectuée, dans lequel une fraction volumique du surnageant s'élève à au moins 50 %, avantageusement > 60 %, particulièrement avantageusement > 70 %, et le surnageant est séparé lorsque ce rapport de volume est atteint.

10. Procédé selon la revendication 9,
**caractérisé en ce que**
plus de deux, de préférence plus de trois des étapes d'extraction supplémentaires sont effectuées avec les étapes de dispersion du sédiment obtenu à partir de l'étape d'extraction précédente et la sédimentation et la séparation ultérieures du surnageant.

11. Procédé selon une des revendications 1 à 10,
**caractérisé en ce que**
l'extraction par immersion est réalisée dans une cuve agitée qui comporte un agitateur, l'agitateur étant ouvert pendant que l'extraction est réglée à ne vitesse circonférentielle > 10 cm/s.

12. Procédé selon une quelconque des revendications 1 à 11,
**caractérisé en ce qu'**
un rapport des fractions massiques de solide lors de l'extraction par immersion est réglé sur une plage comprise entre 50:50 et 10:90.

13. Procédé selon une des revendications 1 à 12,
**caractérisé en ce qu'**
au moins une étape d'extraction pour déshuiler davantage les graines de tournesol ou de colza pelées partiellement déshuilées est effectuée avec une solution aqueuse d'éthanol avec une teneur en eau de <5 % en masse.

14. Procédé selon une des revendications 1 à 13,
**caractérisé en ce que**
l'extraction de solvant est effectuée jusqu'à une teneur en éthanol, qui est encore supérieure à 50 mg/kg, avantageusement supérieure à 500 mg/kg, particulièrement avantageusement supérieure à 5000 mg/kg.
